Europäisches Patentamt

European Patent Office

Office européen des brevets

(19)

(11) **EP 1 605 288 A1**

(12) **EUROPÄISCHE PATENTANMELDUNG**

(43) Veröffentlichungstag:
**14.12.2005 Patentblatt 2005/50**

(51) Int Cl.$^7$: **G02B 6/34**, G02B 6/124

(21) Anmeldenummer: **05017720.3**

(22) Anmeldetag: **26.01.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **27.01.2000 CH 160002000**

(62) Dokumentnummer(n) der früheren Anmeldung(en) nach Art. 76 EPÜ:
**01901098.2 / 1 250 618**

(71) Anmelder: **Unaxis Balzers Aktiengesellschaft
9496 Balzers (LI)**

(72) Erfinder:
• **Maisenhölder, Bernd
8006 Zürich (CH)**

• **Edlinger, Johannes
6820 Frastanz (AT)**
• **Heine, Claus
7000 Chur (CH)**
• **Pawlak, Michael
79725 Laufenburg (DE)**
• **Duveneck, Gert
79189 Bad Krozingen (DE)**

(74) Vertreter: **Wagner, Wolfgang Heribert
Zimmerli, Wagner & Partner AG
Löwenstrasse 19
8021 Zürich (CH)**

Bemerkungen:
Diese Anmeldung ist am 16 - 08 - 2005 als Teilanmeldung zu der unter INID-Kode 62 erwähnten Anmeldung eingereicht worden.

(54) **Optisches Element**

(57) Zu Herstellung eines als Liniengitter mit einer Gitterperiode zwischen 100 nm und 2'500 nm ausgebildeten Koppelgitters wird ein Substrat (1) mit einer Photolackschicht (10) bedeckt und mittels einer Quecksilberdampflampe (11) über einen Umlenkspiegel (13, 13') durch eine Phasenmaske (14), in deren Nahfeld sie angeordnet ist, etwa unter dem Lithrow-Winkel ($\Theta_L$) oder unter 0° belichtet, dann durch reaktives Ionenätzen strukturiert und durch reaktives DC-Magnetron-Sput-tern, insbesondere gepulstes DC-Sputtern oder AC-überlagertes DC-Sputtern mit einer transparenten Schicht versehen. Die Phasenmaske (14) wird vorgängig im Laser-Zweistrahlinterferenzverfahren strukturiert. Schliesslich wird das Gitter durch Aufbringung einer strukturiert durchbrochenen Schicht, z.B. aus einem intransparenten Material wie Chrom, teilweise inaktiviert. Das so hergestellte optische Elelement kann z.B. als Phasenmaske verwendet werden.

FIG. 7a

EP 1 605 288 A1

FIG. 7b

FIG. 7c

FIG. 7d

FIG. 7e

FIG. 7f

FIG. 7g

## Beschreibung

### Technisches Gebiet

Die Erfindung betrifft ein optisches Element sowie eine Verwendung desselben.

Optische Elemente der beschriebenen Art können u.a. als Phasenmasken eingesetzt werden, z. B. zur Herstellung von Beugungsgittern auf Substraten.

### Stand der Technik

Aus EP-A-0 602 829 ist ein Verfahren zur Herstellung einer Gitterstruktur auf einem Substrat z. B. für einen DBR-Halbleiterlaser bekannt, bei welchem zuerst eine Phasenmaske hergestellt wird und anschliessend das Substrat, z. B. InP, unter dem Lithrow-Winkel durch die Phasenmaske hindurch belichtet wird. Die Belichtung kann mittels einer Hg-Xe-Bogenlampe mit einem Durchmesser der Lichtquelle von 0,25 mm erfolgen, wobei drei Linien von um 365 nm Wellenlänge herausgefiltert werden. Das Substrat befindet sich im Nahfeld der Phasenmaske, d. h. in einer Entfernung von höchstens 10 µm.

Zur Herstellung der Phasenmaske wird ein Quarzsubstrat mit drei Schichten, einer Photoresistschicht, einer dünnen Germaniumschicht und schliesslich einer Schicht eines elektronenstrahlempfindlichen Resist bedeckt. Anschliessend wird die oberste Schicht durch Elektronenstrahlschreiben, Entwicklung der obersten Schicht und Entfernen der nichtbelichteten Teile strukturiert. Die Struktur wird durch reaktives Ionenätzen, zuerst mit $CF_3Br$ und dann $O_2$ auf die darunterliegenden Schichten übertragen und schliesslich durch einen weiteren Schritt reaktiven Ionenätzens auf das Quarzsubstrat selbst, worauf die Reste der Schichten entfernt werden. Die Gitterperiode kann z. B. zwischen 190 nm und 250 nm liegen. Die Phasenmaske kann mehrere Zentimeter lang sein und das Gitter kann sich über ihre ganze Länge erstrecken. Die Länge der Linien beträgt allerdings in der Regel nur 5-20 µm. Grössere Längen sind möglich, erfordern aber sehr lange Bearbeitungszeiten. In der Praxis sind Gitter von mehr als 1 $mm^2$ kaum mit vernünftigem Aufwand und guter Genauigkeit herzustellen. Insbesondere sind Versetzungsfehler beim Elektronenstrahlschreiben kaum zu vermeiden.

Aus der US-A-5 675 691 ist eine Platte bekannt, auf der Koppelgitter hergestellt werden, indem auf ein Substrat aus Glas, insbesondere Quarzglas, Keramik oder vorwiegend organischem Material eine Schicht aus $TiO_2$, $Ta_2O_5$, $HfO_2$, $Y_2O_3$, $Al_2O_3$, $Nb_2O_5$, Nitrid oder Oxynitrid von Al, Si oder Hf aufgebracht wird, wobei eine Zwischenschicht von 20 nm Dicke z. B. aus $SiO_2$ vorgesehen sein kann, und durch Ablation oder Veränderung des Brechungsindex mittels Belichtung durch zwei überlagerte Strahlen eines Excimer-Lasers oder durch einen von einer Maske modifizierten Strahl strukturiert wird. Statt dessen kann auch eine Zwischenschicht, z. B. aus $TiO_2$, bei der die Ablationsschranke tiefer liegt, strukturiert werden, die entweder auf die Schicht oder direkt auf das Substrat aufgebracht und in letzterem Fall nach der Strukturierung mit der Schicht überlagert wird. Die Gitterperioden liegen beispielsweise bei 375 nm oder 440 nm. Die Gitterfläche ist frei wählbar und kann z. B. 1 mm × 1 mm oder 8 mm × 8 mm betragen.

Aus US-A-5 822 472 ist eine Evaneszentfeldsensorplatte für chemische Analysen bekannt, die auf einem Träger aus Kunststoff, Glas oder Quarz eine Schicht von 40 nm bis 160 nm Dicke aus $TiO_2$, ZnO, $Nb_2O_5$, $Ta_2O_5$, $HfO_2$ oder $ZrO_2$ trägt. Dazwischen kann eine Zwischenschicht aus nicht lumineszierendem Material von niedrigem Brechungsindex, z. B. Quarz von beispielsweise 100 nm Dicke angeordnet sein, die zugleich als Haftvermittler dient. Es sind ein Einkoppelgitter und ein Auskoppelgitter vorgesehen, welche mit bekannten photolithographischen oder holographischen und Aetzverfahren entweder im Träger oder in der Schicht angelegt sind und eine Gitterperiode von zwischen 200 nm und 1'000 nm aufweisen. Die Gitter können Dimensionen von 2 mm (linienparallel) × 4 mm aufweisen bei einer Gesamtfläche der Wellenleiterplatte von 12 mm × 20 mm.

Aus J. Dübendorfer, R. E. Kunz: 'Compact integrated optical immunosensor using replicated chirped grating coupler sensor chips', Applied Optics 37/10 (1. 4. 1998) ist eine weitere Evaneszentfeldsensorplatte bekannt mit einer Trägerplatte aus Polycarbonat, in welche ein moduliertes Einkoppelgitter mit zwischen 420 nm und 422,8 nm variierender Gitterperiode und ein Auskoppelgitter mit zwischen 595,1 nm und 600,8 nm variierender Gitterperiode eingeprägt wurde. Anschliessend wurde mittels Niedertemperatur-DC-Magnetron-Sputterns eine Schicht aus $TiO_2$ mit einer Dicke von 137 nm und einem Brechungsindex von 2,346 aufgebracht und schliesslich die Evaneszentfeldsensorplatte silanisiert. Der Einkoppelwinkel liegt bei -9,5°, der Auskoppelwinkel bei 22,5°.

US-A-5 738 825 ist eine Mikrotiterplatte entnehmbar, an deren Unterseite eine Schicht von 20 nm bis 1'000 nm, vorzugsweise 30 nm bis 500 nm Dicke aus $TiO_2$, $Ta_2O_5$, $HfO_2$, $ZrO_2$, $SiO_2$, $Si_3N_4$, $Al_2O_3$, $Nb_2O_5$, Nitrid oder Oxynitrid von Al, Si oder Hf angebracht und von einer Kunststoffschicht bedeckt ist. Unterhalb jeder Kavität sind Ein- und Auskoppelgitter angebracht. Die Gitter weisen eine Gitterperiode von zwischen 330 nm und 1'000 nm, insbesondere ca. 400 nm bis 800 nm auf und sind mit lithographischen oder mechanischen Methoden hergestellt.

Aus der CH-A-688 165 ist eine Wellenleiterplatte bekannt mit einem Substrat aus Kunststoff, z. B. Polycarbonat, dessen Oberfläche mechanisch - durch Tiefziehen, Prägen oder beim Spritzgiessen desselben - strukturiert, insbesondere mit einem Koppelgitter versehen wurde und eine durch ein PVD-Verfahren aufgebrachte Schicht aus $TiO_2$, $Ta_2O_5$, $ZrO_2$, $Al_2O_3$, $SiO_2$-

$TiO_2$, $HfO_2$, $Y_2O_3$, $Nb_2O_5$, Siliziumnitrid, Oxinitrid, $SiO_xN_y$, $HfO_xN_y$, $AlO_xN_y$, $TiO_xN_y$, $MgF_2$ oder $CaF_2$ trägt. Zur Verminderung der Dämpfungsverluste ist eine vor der Schicht auf das Substrat aufgebrachte ca. 20 nm dicke Zwischenschicht aus einem anorganischen dielektrischen Material wie $SiO_2$ vorgesehen, die zugleich als Haftvermittler dient.

Alle oben beschriebenen Platten sind nach Verfahren hergestellt, mit denen keine befriedigende Gleichmässigkeit des Koppelgitters zu erzielen ist, so dass der Koppelwinkel verhältnismässig stark schwankt. Dies führt dazu, dass beim Gebrauch als Evaneszentfeldsensorplatte die relative Winkellage des Belichtungsgeräts und der Platte bei jedem Schritt aufwendig optimiert werden muss. Beim Gebrauch als optischer Koppler in der Nachrichtentechnik sind die Filtereigenschaften unbefriedigend und beispielsweise zum selektiven Herausfiltern einer Wellenlänge aus einer Gruppe sehr nahe beieinanderliegender Wellenlängen nicht ausreichend. Einige der beschriebenen Verfahren sind auch sehr aufwendig oder gestatten keine sehr grossen Stückzahlen bei gleichbleibender Qualität.

## Darstellung der Erfindung

Der Erfindung liegt die Aufgabe zu Grunde, ein Verfahren anzugeben, welches die Herstellung, insbesondere die Serienherstellung von Gitterstrukturen mit grosser Präzision und mit verhältnismässig geringem Aufwand gestattet. Diese Aufgabe wird durch die Merkmale im Kennzeichen des Anspruchs 1 gelöst. Mit dem erfindungsgemässen Verfahren sind auch grossflächige, insbesondere linienparallel lange zusammenhängende Gitterstrukturen mit durchgehend grosser Präzision einfach und kostengünstig herstellbar. Ausserdem ist eine weitgehende Gestaltungsfreiheit bezüglich der Anordnung und Ausbildung der Gitterstrukturen gewährleistet. Daher ist die Herstellung sehr verschiedener optischer Elemente für unterschiedliche Anwendungsgebiete mit den gleichen Anlagen möglich. Das erfindungsgemässe Verfahren erlaubt darüberhinaus die Herstellung grosser Serien von optischen Elementen in gleichbleibender Qualität und mit innerhalb enger Grenzen gleichbleibenden optischen Eigenschaften wie Koppeleffizienzen und insbesondere Koppelwinkeln.

Ausserdem soll ein hochpräzises optisches Element angegeben werden, wie es mittels des erfindungsgemässen Verfahrens herstellbar ist. Insbesondere kann das optische Element als Evaneszentfeldsensorplatte oder als auf einer solchen beruhende Mikrotiterplatte ausgebildet sein. Durch die auch bei grossen Gitterlängen engen Grenzen, innerhalb welcher der Koppelwinkel schwankt, ist es möglich, grössere Teile der Evaneszentfeldsensorplatte oder Mikrotiterplatte gleichzeitig zu belichten und auszulesen. Auch nacheinander erfolgende Belichtungen verschiedener Teile der Evaneszentfeldsensorplatte oder Mikrotiterplatte sind vereinfacht, da eine Neuoptimierung der relativen Winkellage derselben und der Belichtungseinheit nicht erforderlich oder jedenfalls sehr erleichtert ist.

Das optische Element kann auch als nachrichtentechnischer optischer Koppler ausgebildet sein. Die hohe Präzision auch grösserer Gitterstrukturen gewährleistet in diesem Fall ausgezeichnete Filtereigenschaften, insbesondere ein sehr schmalbandiges Aussondern einzelner Wellenlängen, so dass z. B. Wellenlängen-Multiplexen mit sehr nahe beieinanderliegenden Wellenlängen möglich ist, was die Uebertragungskapazität erhöht.

## Kurze Beschreibung der Zeichnungen

Im folgenden wird die Erfindung anhand von Figuren, welche lediglich ein Ausführungsbeispiel darstellen, näher erläutert. Es zeigen

Fig. 1 — eine Draufsicht auf eine erfindungsgemässe Evaneszentfeldsensorplatte mit gestrichelt angedeutetem Aufsatz, der sie zu einer Mikrotiterplatte ergänzt,

Fig. 2 — einen Schnitt längs II-II in Fig. 1,

Fig. 3 — schematisch den Einsatz einer Mikrotiterplatte mit einer erfindungsgemässen Evaneszentfeldsensorplatte,

Fig. 4a-e — verschiedene Schritte der Herstellung einer erfindungsgemässen Evaneszentfeldsensorplatte,

Fig. 5 — schematisch den für die Belichtung der Photolackschicht während der Herstellung der erfindungsgemässen Evaneszentfeldsensorplatte verwendeten Aufbau,

Fig. 6 — die Phasenmaske und das Substrat mit der Photolackschicht unter der Belichtung und

Fig. 7a-g — verschiedene Schritte der Herstellung einer Phasenmaske für die Herstellung einer erfindungsgemässen Evaneszentfeldsensorplatte.

Fig. 8a — schematisch eine Draufsicht auf einen erfindungsgemässen nachrichtentechnischen optischen Koppler gemäss einer ersten Ausführungsform,

Fig. 8b — schematisch einen zentralen Längsschnitt durch den Koppler nach Fig. 8a,

Fig. 9a — schematisch die Reflexivität des Kopplers gemäss der ersten Ausführungsform,

Fig. 9b-d — Diagramme, welche die Aussonderung einer Wellenlänge durch den Koppler gemäss der ersten Ausführungsform zeigen,

Fig. 10 eine Anordnung mit einem Koppler gemäss der ersten Ausführungsform,

Fig. 11a schematisch eine Draufsicht auf einen erfindungsgemässen nachrichtentechnischen optischen Koppler gemäss einer zweiten Ausführungsform,

Fig. 11b schematisch einen zentralen Längsschnitt durch den Koppler nach Fig. 11a,

Fig. 12 eine Anordnung mit einem Koppler gemäss der zweiten Ausführungsform,

Fig. 13a schematisch eine Draufsicht auf einen erfindungsgemässen nachrichtentechnischen optischen Koppler gemäss einer dritten Ausführungsform,

Fig. 13b schematisch einen zentralen Längsschnitt durch den Koppler nach Fig. 13a,

Fig. 14 eine Vorrichtung zur Ueberwachung und Stabilisierung der Wellenlänge eines von einem Laser ausgesandten Lichstrahls mit einem Koppler gemäss der dritten Ausführungsform und

Fig. 15 die Transmissivität des Kopplers gemäss der dritten Ausführungsform in Abhängigkeit von der Position auf dem Koppelgitter bei verschiedenen Wellenlängen.

**Wege zur Ausführung der Erfindung**

Das erfindungsgemässe Verfahren wird im folgenden im Zusammenhang mit einer erfindungsgemässen Evaneszentfeldsensorplatte und ihrer Herstellung näher erläutert. Unter einer Evaneszentfeldsensorplatte wird dabei eine Platte verstanden, bei welcher es möglich ist, durch Beleuchtung eines Teils der Oberfläche ein evaneszentes Feld herzustellen, in dessen Bereich eine zu analysierende Probe angeordnet werden kann. Evaneszentfeldsensorplatten dienen mithin der chemischen Analyse. Evaneszente Felder sind nichtstrahlende elektromagnetische Felder, die mit wachsendem Abstand von der Streuoberfläche, an der sie entstehen, abnehmen und verschwinden. Solche Felder können im Zusammenhang mit räumlichen Modulationen des elektrischen Feldes in der Ebene, deren Periodizitäten kleiner als eine Wellenlänge sind, auftreten. Das bekannteste Beispiel einer solchen Modulation findet an einer Grenzfläche eines Dielektrikums zu Luft statt, wenn ein Lichtstrahl von der Seite des Dielektrikums unter einem Winkel einfällt, der grösser als der kritische Winkel ist.

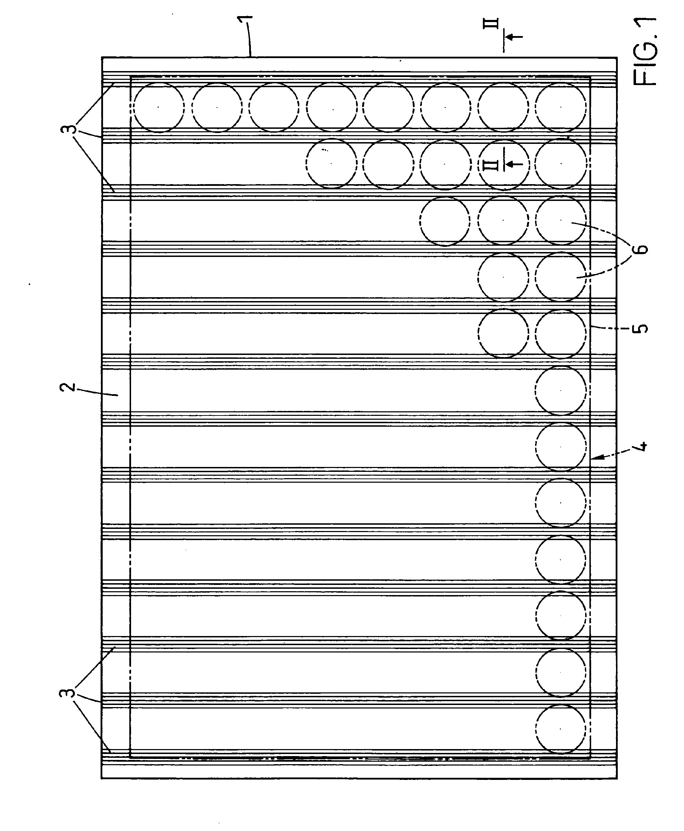

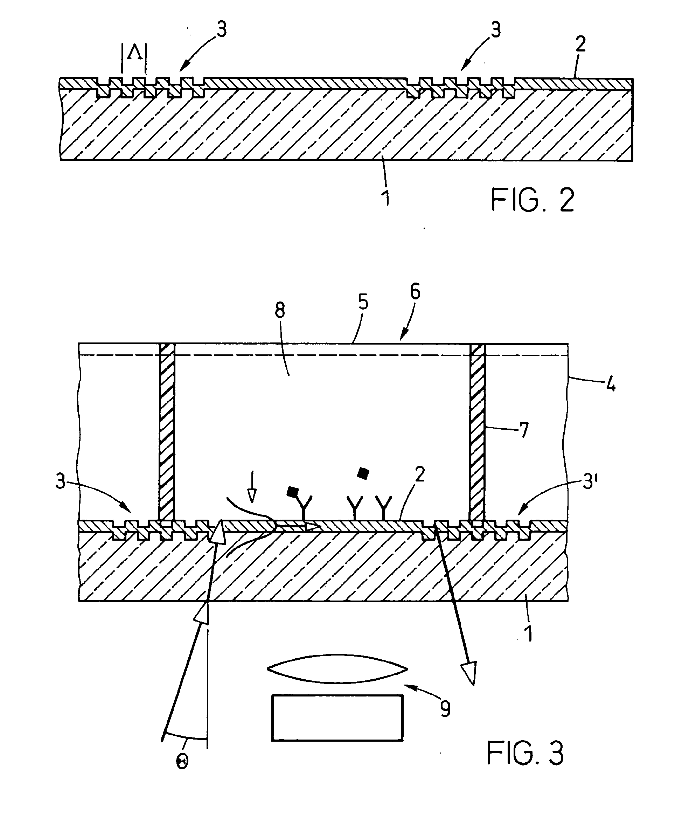

Evaneszentfeldsensorplatten weisen jeweils eine transparente lichtleitende Schicht auf, von der aus Evaneszentlicht aus ihrer Oberfläche austritt und mit dort gebundenen Molekülen in Wechselwirkung tritt, z. B. sie zur Lumineszenz anregt. Die Evaneszentfeldsensorplatte besteht (Fig. 1, 2, die Darstellungen sind schematisch und nicht massstäblich) aus einem Substrat 1 aus Glas, z. B. aus AF 45 der Schott DESAG mit Abmessungen von 102 mm $\times$ 72 mm und einer Dicke von 0,7 mm, das einseitig eine transparente Schicht 2 aus $Ta_2O_5$ von 150 nm Dicke trägt. Ihr Brechungsindex beträgt bei einer Wellenlänge von 633 nm 2,11.

Auf der die Schicht 2 tragenden Oberfläche sind mehrere als parallele, voneinander beabstandete Streifen ausgebildete Koppelgitter 3 angelegt, welche sich linienparallel jeweils über die ganze Breite der Evaneszentfeldsensorplatte erstrecken. Die Breite jedes der Streifen beträgt 0,5 mm. Die Gitterperiode beträgt $\Lambda = 360$ nm, das Nut-Steg-Verhältnis ist ca. 1:1, die Gittertiefe ca. 20 nm. Die das Gitter definierenden Parameter sind jeweils über die ganze Länge des Streifens sehr genau eingehalten. Dadurch halten sich Aenderungen des Koppelwinkels $\Theta$, unter dem ein von unten durch das Substrat 1 gegen das Koppelgitter 3 gerichteter Lichtstrahl, insbesondere bei einer Wellenlänge von ca. 633 nm, mit maximaler Koppeleffizienz in die Schicht 2 eingekoppelt wird, in sehr engen Grenzen. Längs den Linien eines Koppelgitters 3 ändert er sich höchstens um 0,05°/cm. Auf der gesamten Evaneszentfeldsensorplatte bleibt die Abweichung des Koppelwinkels $\Theta$ von einem Mittelwert, der im beschriebenen Fall 2,31° entspricht, unter 0,15°.

Die Oberfläche der Schicht 2 ist mit einer Beschichtung versehen, die aus einer Haftvermittlungsschicht, vorzugsweise aus mindestens einer chemischen Verbindung aus der Gruppe der Silane, Epoxide und selbstorganisierenden funktionalisierten Monoschichten und einer auf dieser angeordneten Schicht molekularer Erkennungselemente wie Nukleinsäuren, Antikörpern, Antigenen, Membranrezeptoren und deren Liganden besteht.

Wie in Fig. 3 dargestellt und in Fig. 1 angedeutet, wird die Evaneszentfeldsensorplatte für den Einsatz bei der chemischen Analyse insbesondere biologischer Substanzen durch einen wabenartigen Aufsatz 4 aus Kunststoff zu einer Mikrotiterplatte ergänzt. Der Aufsatz weist eine Deckplatte 5 auf, welche von in einem regelmässigen Raster angeordneten runden Oeffnungen 6 von z. B. ca. 8 mm Durchmesser durchbrochen ist. An jede der Oeffnungen 6 schliesst an der Unterseite der Deckplatte 5 ein unten offener Rohrabschnitt 7 an, der eine Kavität 8 seitlich begrenzt und der am unteren Ende mit der Evaneszentfeldsensorplatte 2 dicht verbunden, z. B. verklebt ist.

Soll der Inhalt einer Kavität 8, z. B. ein Analyt wie Blut, Serum, Urin, Speichel oder eine Lösung mit einem Wirkstoffkandidaten auf die Konzentration bestimmter Moleküle untersucht werden, so wird in an sich bekannter Weise ein benachbartes Koppelgitter 3 der Evaneszentfeldsensorplatte 2 mittels einer geeigneten Lichtquelle unter dem Koppelwinkel Θ mit Licht einer bestimmten Wellenlänge, im Beispiel mittels eines He-Ne-Lasers mit Licht von 633 nm Wellenlänge, belichtet. Das Licht wird durch die Schicht 2, welche den Boden der Kavität 8 bildet, zum benachbarten Koppelgitter 3' geleitet und dort wieder ausgekoppelt. Das Evaneszentlicht regt an die Erkennungselemente gebundene Moleküle in der Kavität 8 zu Fluoreszenz an, welche von einer Optik 9 registriert und dann analysiert wird. Die hohe Genauigkeit, mit der der Koppelwinkel Θ über die Länge des Koppelgitters 3 eingehalten wird, erlaubt eine gleichzeitige Untersuchung der längs desselben angeordneten Kavitäten mit hoher Effizienz. Da der Koppelwinkel Θ über die gesamte Evaneszentfeldsensorplatte nur wenig vom Mittelwert abweicht, ist jedoch auch für die Untersuchung der nächsten Reihe von Kavitäten 8 keine aufwendige Optimierung desselben erforderlich. Alternativ oder zusätzlich zur Auswertung der Fluoreszenz können auch durch Bindung von Molekülen an die Erkennungselemente bewirkte Aenderungen des Brechwerts am Grund der Kavität 8 registriert werden.

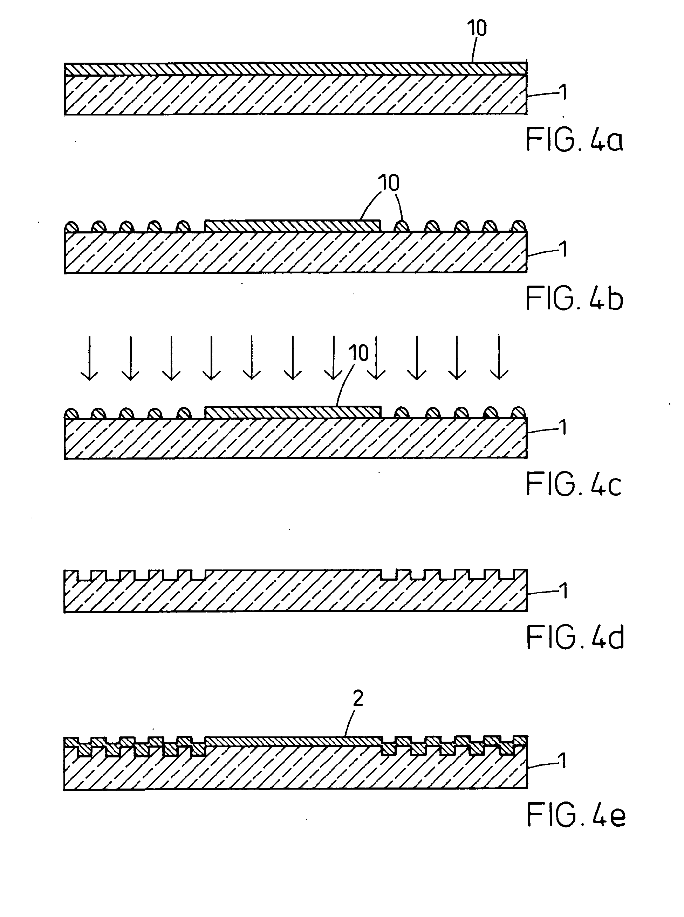

Zur Herstellung der transparenten Schicht 2 wird, wie in Fig. 4a-e schematisch dargestellt, zuerst auf das Substrat 1 Photolack, z. B. AZ1518, 1:4 verdünnt mit AZ1500, beide von Clariant, bei 1'300 U/min aufgebracht und anschliessend 30 min bei 90°C im Ofen ausgebacken, dann wird Aquatar des gleichen Herstellers bei 1'400 U/min aufgebracht und während 15 min bei 90°C wiederum im Ofen ausgebacken. Die so hergestellte Photolackschicht 10 weist eine Dicke von weniger als 200 nm, in der Regel von ca. 150 nm auf, so dass sich keine störenden stehenden Wellen in derselben ausbilden. Die Reflexivität liegt unter 1%, so dass störende Reflexionen, die zur Ausbildung Newtonscher Ringe führen könnten, ebenfalls praktisch ausgeschlossen sind (Fig. 4a).

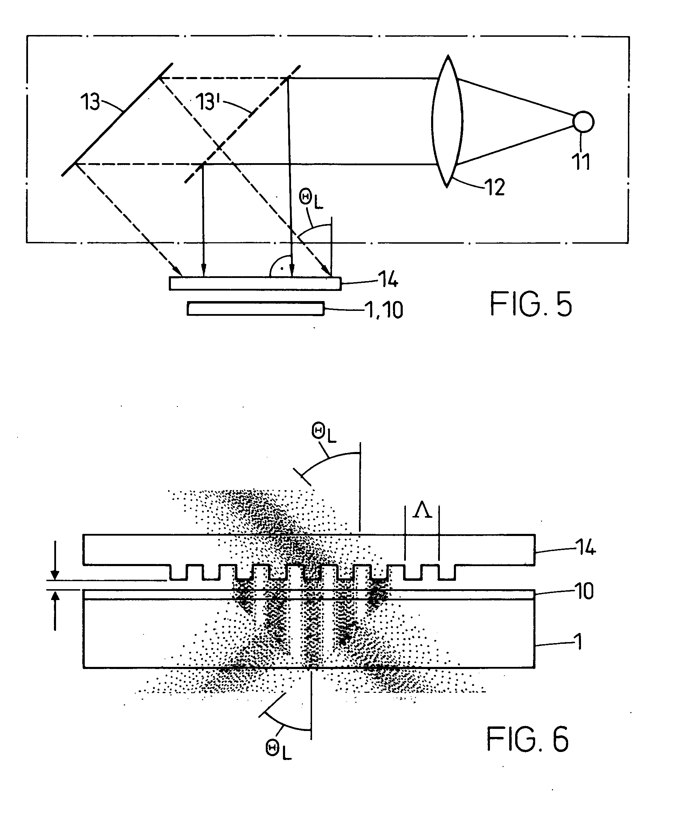

In einem nächsten Schritt wird die Photolackschicht 10 während 70 sec belichtet. Dazu wird das Substrat 1 in den Aufbau gemäss Fig. 5 eingebracht, einem Mask Aligner MA4 der Firma Süss, München, welcher eine modifizierte Quecksilberdampflampe 11 mit modifizierter nachgeschalteter Optik 12 und Umlenkspiegel 13 umfasst. Die Optik 12 umfasst einen Bandpassfilter, der z. B. die I-Linie mit 365 nm Wellenlänge herausfiltert sowie einen Polarisator, der vorzugsweise eine s-Polarisation erzeugt. Zur Verbesserung der Parallelität der Strahlen wird das Fliegenauge aus dem Strahlengang entfernt, eine Lampe mit möglichst kleinem Bogen verwendet und möglichst weit vom Substrat entfernt.

Die Belichtung erfolgt durch eine Phasenmaske 14. Sie umfasst ein Substrat aus einem transparenten Material, im Beispiel Quarz, mit einer grossflächigen Gitterstruktur, einem Beugungsgitter, das eine Schicht aus intransparentem Material, im Beispiel Chrom, trägt, welche - im Beispiel von in regelmässigen Abständen aufeinanderfolgenden Streifen - durchbrochen ist. Phasenmasken dieser Art können bei Ibsen in Farum (Dänemark) bezogen werden und werden etwa wie folgt hergestellt:

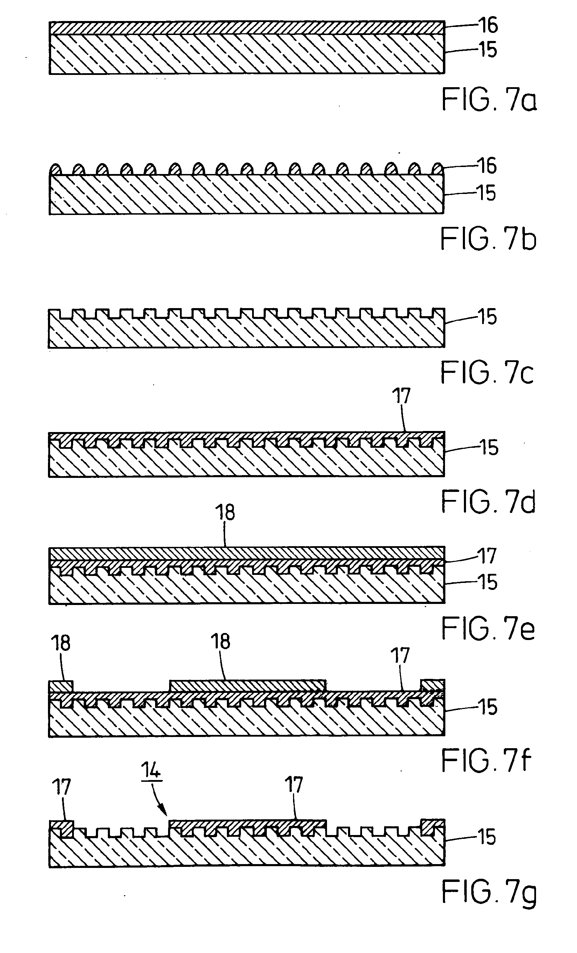

Ein Quarzsubstrat 15 wird mit einer Photolackschicht 16 bedeckt (Fig. 7a) und dieselbe im Laser-Zweistrahlinterferenzverfahren belichtet und entwickelt (Fig. 7b). Anschliessend wird auf der Oberfläche des Quarzsubstrats 15 durch Aetzen und anschliessendes Entfernen des Photolacks ganzflächig ein Beugungsgitter hergestellt (Fig. 7c). Dann wird die besagte Oberfläche zur Gänze mit einer Chromschicht 17 bedeckt (Fig. 7d). Auf die Chromschicht 17 wird nun eine durchgehende Photolackschicht 18 aufgebracht (Fig. 7e) und durch eine mittels Elektronen- oder Laserstrahlschreiben strukturierte Maske hindurch belichtet. Dann wird der Photolack entwickelt (Fig. 7f) und die Chromschicht 17 an den nicht von Photolack bedeckten Teilen durch Aetzen entfernt. Schliesslich werden zur Fertigstellung der Phasenmaske 14 die Reste der Photolackschicht 18 entfernt (Fig. 7g). Die Struktur der Maske bestimmt so, welche Teile der Phasenmake transparent sind.

Das Substrat 1 ist so unterhalb der Phasenmaske 14 angeordnet, dass die Photolackschicht 10 mit derselben in Vakuumkontakt steht. Die Oberseite der Phasenmaske 14 wird unter einem Winkel belichtet, der etwa dem Lithrow-Winkel $\Theta_L$, bei welchem der Einfallswinkel gleich dem Winkel der ersten Beugungsordnung ist, entspricht, insbesondere nicht mehr als 10°, vorzugsweise nicht mehr als 5° von demselben abweicht. Unter diesen Bedingungen bildet sich im Nahfeld unterhalb der transparenten Bereiche der Phasenmaske 14 ein ausgeprägtes Beugungsmuster, dessen Struktur dem des Gitters der Phasenmaske 14 entspricht (Fig. 6). Alternativ dazu kann die Phasenmaske 14 auch unter einem Winkel belichtet werden, der etwa 0° entspricht, d. h. senkrechtem Einfall, oder davon um nicht mehr als 10°, vorzugsweise nicht mehr als 5° abweicht (gestrichelt eingezeichneter Umlenkspiegel 13'). In diesem Fall hat das Beugungsmuster im Nahfeld der Phasenmaske 14 die halbe Periode des Gitters derselben.

Nach der Belichtung wird die Aquatar-Schicht durch Spülen mit destilliertem Wasser entfernt und dann der Photolack entwickelt (Fig. 4b). Anschliessend werden die nicht mit Photolack bedeckten Teile der Oberfläche des Substrats 1 mit Ar und $CHClF_2$ bei einem Druck von 0,02 mbar in einem Parallelplattenreaktor mit kapazitiver Anregung des Plasmas bei 13,6 MHz und einer RF-Leistung von 50 W geätzt. Die Aetztiefe beträgt 20 nm. Dann wird der Photolack entfernt. Dazu wird er zuerst während 60 sec reaktivem Ionenätzen in Sauerstoffplasma bei einem Druck von 0,2 mbar und einer RF-Leistung von 50 W ausgesetzt und dann mit Remover AZ100, Deconex und destilliertem Wasser abgelöst (Fig. 4d).

Schliesslich wird die Schicht 2 durch reaktives gepulstes DC-Magnetron-Sputtern oder mit einer zwischen 1 kHz und 1 MHz liegenden Frequenz AC-überlagertes DC-Magnetron-Sputtern in einer Anlage Balzers MSP1000 ähnlich wie in EP-A-0 508 359 beschrieben aufgebracht (Fig. 4e). Dieser Schritt erfolgt in einer Ar-O$_2$-Atmosphäre bei einem Druck von 3,7 µbar. Das Targetmaterial ist Tantal. Schliesslich wird die Evaneszentfeld-sensorplatte durch Wafersägen auf ihre Endgrösse zugeschnitten.

Das beschriebene Verfahren gestattet es, vor allem dank der Belichtung durch eine praktisch beliebig oft wiederverwendbare Phasenmaske, auf einfache Weise Elemente mit Gitterstrukturen, insbesondere diffraktiven Koppelgittern, in grossen Stückzahlen herzustellen. Der Umstand, dass die Phasenmaske im Zweistrahlinterferenzverfahren strukturiert wird, erlaubt die Herstellung auch grosser fehlerfreier Gitterstrukturen auf derselben, die Flächeninhalte von 10 cm$^2$ und mehr aufweisen, mit hoher Präzision, während andere Strukturierungsmethoden wie etwa Elektronenstrahlschreiben wegen der dabei fast unvermeidlichen Versetzungsfehler dazu nicht geeignet sind. Daher können grosse optische Elemente mit grossflächigen Gittern von hoher Qualität und Gleichmässigkeit nicht nur als Endprodukte hergestellt werden, sondern auch als Rohlinge, welche dann durch Wafersägen, Ritzen und Brechen oder Laserschneiden zu kleineren Endprodukten vereinzelt werden, welche auf diese Weise sehr wirtschaftlich in hoher Qualität hergestellt werden können.

Es können natürlich auch Evaneszentfeldsensorplatten, hergestellt werden, deren Geometrien und optische Eigenschaften anderen Normen oder sonstigen Anforderungen entsprechen. So kann eine weitere Evaneszentfeldsensorplatte Abmessungen von 57 mm × 14 mm × 0,7 mm aufweisen und mit zwei symmetrisch angeordneten, parallel zu den Längsseiten verlaufenden streifenförmigen Koppelgittern mit einer Breite von jeweils 0,5 mm versehen sein, die um 9 mm voneinander beabstandet sind. Die Gitterperiode beträgt Λ=318 nm, die Gittertiefe 12 nm, während im übrigen die Eigenschaften der Schicht und der Koppelgitter gleich wie beim ersten Beispiel sind. Der Koppelwinkel beträgt in diesem Fall bei einer Wellenlänge von 633 nm Θ=-12,14° und ändert sich linienparallel um höchstens 0,15°/cm. Die Abweichung von einem Mittelwert bleibt auf der ganzen Evaneszentfeldsensorplatte unter 0,05°. Bei der Herstellung eines Rohlings, aus dem dann die beschriebenen Evaneszentfeldsensorplatten durch Wafersägen vereinzelt werden, wird eine 150 mm × 150 mm grosse Phasenmaske mit einem ein 115 mm × 115 mm grosses Gitter mit einer Gitterperiode von 318 nm tragenden Bereich eingesetzt. Die den Koppelgittern entsprechenden Bereiche liegen frei, während der verbleibende Teil des Gitters wiederum durch eine intransparente Schicht, insbesondere eine Chromschicht, maskiert ist. Im übrigen erfolgt die Herstellung gleich wie weiter oben beschrieben.

Ein weiteres Beispiel ist eine in ihrer grundsätzlichen Ausbildung im wesentlichen Fig. 1 entsprechende Evaneszentfeldsensorplatte mit den Abmessungen 75 mm × 113,5 mm × 0,7 mm, welche dreizehn zu den Breitseiten parallele als Streifen ausgebildete Koppelgitter mit einer Breite von jeweils 0,5 mm trägt, wobei der Abstand zwischen benachbarten Streifen jeweils 8,5 mm beträgt. Schicht und Gittereigenschaften entsprechen dem zweiten Beispiel. Der Koppelwinkel beträgt bei einer Wellenlänge von 633 nm Θ=-11,48 und ändert sich linienparallel um höchstens 0,05°/cm. Auf der gesamten Evaneszentfeld-sensorplatte weicht er von einem Mittelwert um höchstens 0,4° ab. Die Evaneszentfeldsensorplatte kann durch einen geeigneten Aufsatz zu einer Mikrotiterplatte mit 8 × 12 Kavitäten ergänzt werden.

Neben den oben geschilderten Ausbildungen von nach dem erfindungsgemässen Verfahren hergestellte Gitterstrukturen tragenden optischen Elementen für den Bereich der chemischen Analytik kommen vor allem auch solche für nachrichtentechnische Anwendungen in Frage. Derartige Elemente eignen sich vor allem als hochwirksame optische Koppler, wie sie z. B. in Glasfasernetzen eingesetzt werden.

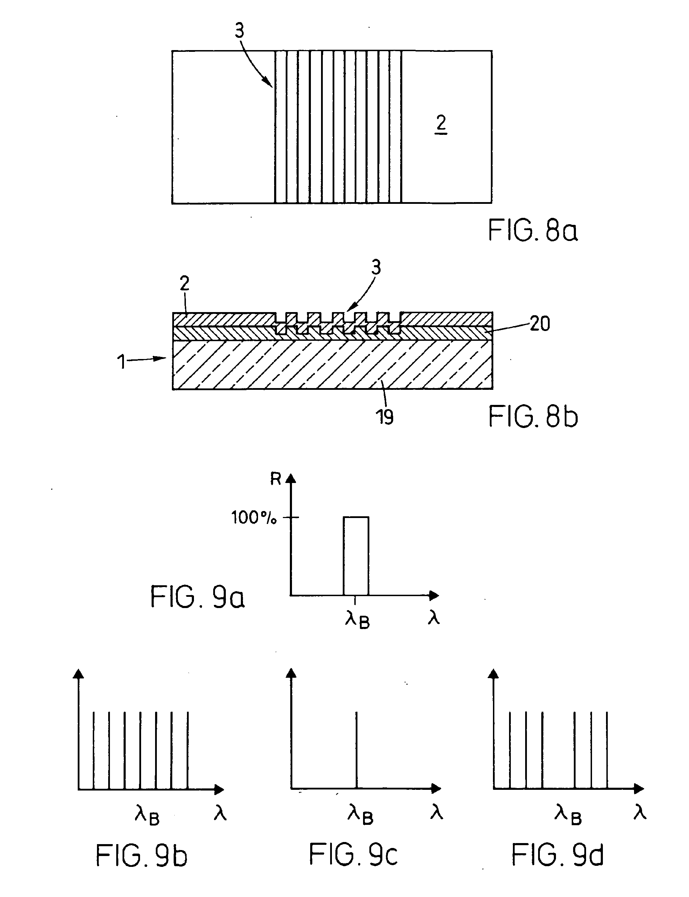

Ein erstes Beispiel eines solchen Kopplers ist in Fig.8a,b dargestellt. Auf einem Substrat 1 bestehend aus einer Glasplatte 19 und einer Schicht 20 aus transparentem Material ist ein als Liniengitter mit konstanter Gitterperiode ausgebildetes Koppelgitter 3 angelegt. Die Schicht 20 ist von einer transparenten Schicht 2 aus z. B. Ta$_2$O$_5$ bedeckt. Die Schicht 2 wirkt als Wellenleiter. Das Koppelgitter 3 reflektiert gemäss der in Fig. 9a schematisch dargestellten wellenlängenabhängigen Rexlexivität R Licht einer bestimmten Wellenlänge $\lambda_B$, während eingehendes Licht aller übrigen Wellenlängen transmittiert wird. Dies ist in Fig. 9b-d dargestellt, wo Fig. 9a die eingehenden Wellenlängen zeigt, Fig. 9b die reflektierte Wellenlänge $\lambda_B$ und Fig. 9c die transmittierten Wellenlängen. Damit ist es mittels des Kopplers möglich, etwa in einem Glasfasernetz, bei dem Wellenlängen-Multiplexen eingesetzt wird, eine bestimmte Wellenlänge auszufiltern. Dank der hohen Qualität des Gitters ist die Halbwertsbreite der Reflexivität R als Funktion der Wellenlänge sehr klein. Es ist daher auch bei sehr nahe beieinanderliegenden Wellenlängen möglich, eine Wellenlänge mit hoher Effizienz auszusondern.

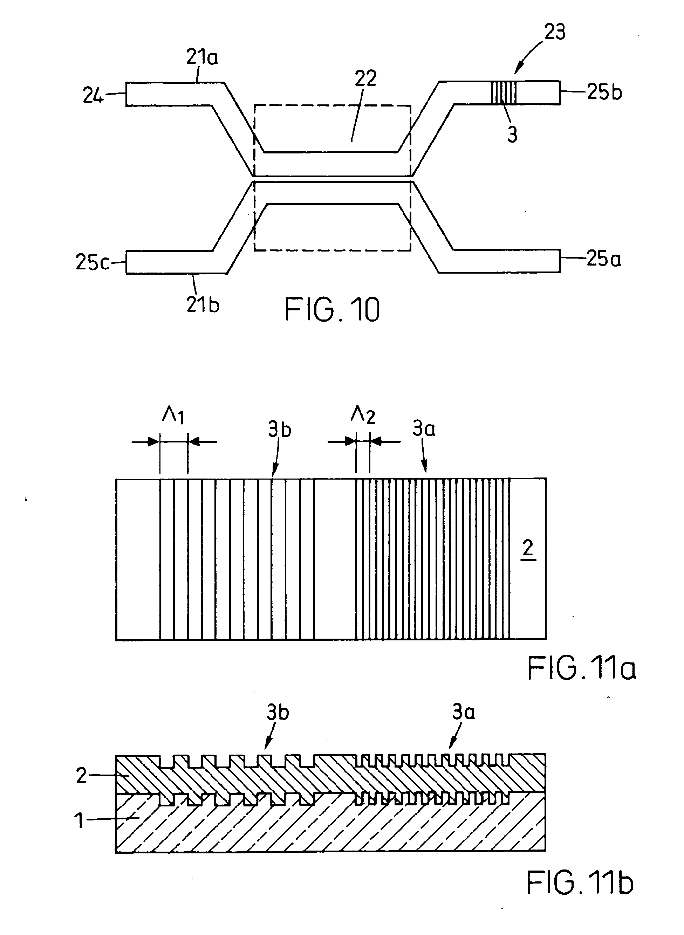

Ein Beispiel für die Verwendung eines derartigen Kopplers ist in Fig. 10 gezeigt. Zwei parallele Streifenwellenleiter 21a,b bekannten Aufbaus sind an einem Kopplungsbereich 22 mit sehr geringem Abstand parallelgeführt, so dass dort ein Uebergang von 50% des im ersten Streifenwellenleiter 21a geführten Lichtes auf den zweiten Streifenwellenleiter 21b stattfindet und umgekehrt. Im auslaufenden Teil des ersten Streifenwellenleiters 21a ist ein Koppler 23 mit einem Koppelgitter 3 gemäss Fig. 8a,b eingebaut, welcher Licht einer Wellenlänge $\lambda_B$ selektiv reflektiert.

Werden in den ersten Streifenwellenleiter 21a an einem Eingang 24 Signale mit Wellenlängen $\lambda_1$, $\lambda_2$, $\lambda_3$, $\lambda_4$ etc. eingespeist, so gehen einerseits sämtliche Signale im Kopplungsbereich 22 zu 50% auf den zweiten Streifenwellenleiter 21b über, in dem sie zu einem ersten Ausgang 25a geleitet werden, während die im ersten Streifenwellenleiter 21a verbleibenden Signale zu einem zweiten Ausgang 25b geleitet werden, mit Ausnahme des Signals mit der $\lambda_B$ gemäss Fig. 9a-d entsprechenden Wellenlänge $\lambda_3$, das am Koppler 23 reflektiert wird, so dass 50% seiner Intensität im Kopplungsbereich 22 in den zweiten Streifenwellenleiter 21b übergehen, wo das Signal in entgegengesetzter Richtung zu den unmittelbar vom ersten Streifenwellenleiter 21a übergetretenen Signalen zu einem dritten Ausgang 25c geleitet wird, wo es schliesslich isoliert vorliegt und weiterverarbeitet werden kann. Die Signale der Ausgänge 25a,b können wieder zusammengeführt werden zu einem Signal, das sich vom ursprünglichen lediglich durch eine Schwächung des Signals mit der Wellenlänge $\lambda_3$ um 50% unterscheidet.

Der Koppler 23 kann vollständig in den ersten Streifenwellenleiter 21a integriert sein, derart, dass dieser gleich aufgebaut ist wie der Koppler 23 und derselbe einstückig mit dem ersten Streifenwellenleiter 21a ist. Der Koppler 23 ist dann lediglich dadurch ausgezeichnet, dass er das Koppelgitter 3 trägt.

Ein zweites Beispiel für einen Koppler ist in Fig. 11a,b dargestellt. Auf einem rechteckigen Substrat 1 aus Glas, z. B. Schott DESAG AF 45 mit dem Brechungsindex 1,52 sind an der Oberseite in Längsrichtung mit Abstand aufeinanderfolgend zwei Koppelgitter, ein Einkoppelgitter 3a und ein Auskoppelgitter 3b angeordnet, die sich jeweils über die ganze Breite des Kopplers erstrecken. Das Einkoppelgitter 3a hat eine Gitterperiode $\Lambda_1$=981 nm und eine Gittertiefe von 6 nm, das Auskoppelgitter 3b eine Gitterperiode $\Lambda_2$=1'350 nm und eine Gittertiefe von 12 nm. Die Oberseite des Substrats 1 ist mit einer durchgehenden transparenten Schicht 2 bedeckt, welche aus $Ta_2O_5$ besteht und einen Brechungsindex von 2,1 aufweist. Ihre Dicke beträgt 400 nm.

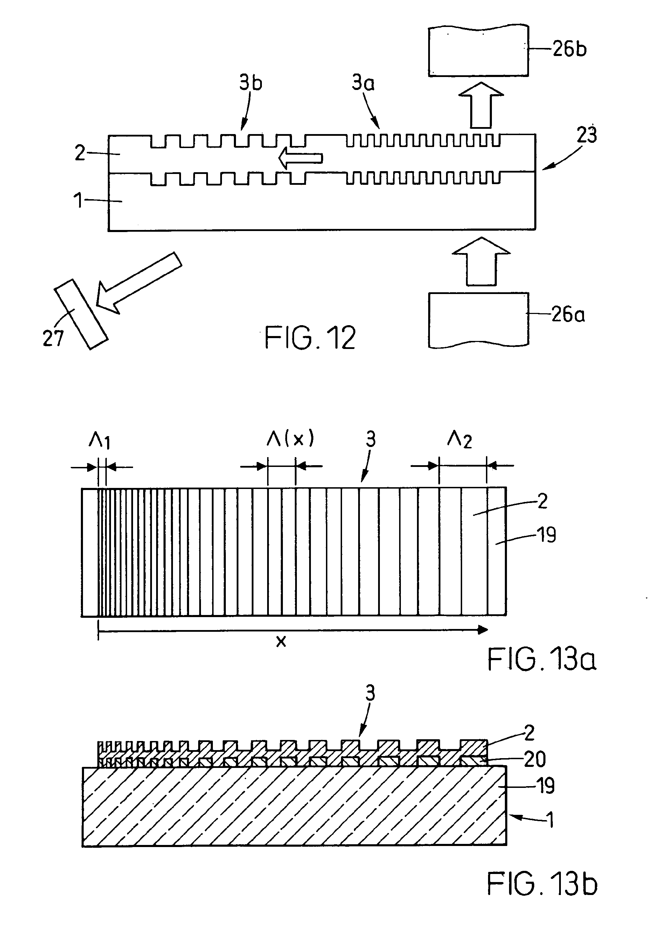

Der Koppler kann als Auskoppelfilter (Drop-Filter) zur Ueberwachung und Stabilisierung der Intensität eines Lichtstrahls, etwa einer Linie eines Multimode-Lasers eingesetzt werden. Dazu wird (Fig. 12) der oben beschriebene Koppler 23 zwischen die Enden einer ersten Lichtleitfaser 26a und einer in der Fortsetzung derselben angeordneten zweiten Lichtleitfaser 26b so angeordnet, dass das Einkoppelgitter 3a dem Ende der letzteren zugewandt ist, während die erstere gegen die Unterseite des Kopplers 23 gerichtet ist. Das von der ersten Lichtleitfaser 26a zugeführte Licht geht durch den das Einkoppelgitter 3a tragenden Teil des Kopplers 23 durch, wobei durch dasselbe ein Bruchteil des Lichtes der 1'550 nm-Linie, der weniger als 0,01% der Intensität desselben entspricht, in die Schicht 2 eingekoppelt wird. Am Auskoppelgitter 3b wird Licht unter einem Winkel von 30° ausgekoppelt und fällt auf einen entsprechend angeordneten Photodetektor 27, dessen Ausgangssignal ein Mass für die Intensität der überwachten Linie ist. Die Einkopplung erfolgt dank der hohen Präzision des Einkoppelgitters 3a sehr wellenlängensensitiv, mit einer Halbwertsbreite der Intensitätsverteilung von lediglich 0,01 nm, was die gezielte Ueberwachung einer einzelnen Wellenlänge auch bei nahe zusammenliegenden Wellenlängen, wie dies beim Wellenlängen-Multiplexen im Interesse einer hohen Uebertragungskapazität wüschenswert ist, ermöglicht.

Ein drittes Beispiel für einen erfindungsgemässen optischen Koppler ist in Fig. 13a,b dargestellt. Ein rechteckiges Substrat 1 besteht aus einer Glasplatte 19 mit dem Brechungsindex 1,586 und einer seine Oberseite bedeckenden 285 nm dicken transparenten Schicht 20 aus $TiO_2$, das einen Brechungsindex von 2,4 aufweist. Die Oberseite trägt ein ihre ganze Breite einnehmendes Koppelgitter 3, das durch linienweise vollständige Entfernung der Schicht 20 hergestellt ist und ist von einer weiteren, 342 nm dicken transparenten Schicht 2 aus $MgF_2$, das einen Brechungsindex von 1,38 aufweist, bedeckt. Die Gittertiefe entspricht also der Dicke der Schicht 20 und beträgt 285 nm. Die Gitterperiode $\Lambda(x)$ ändert sich liniennormal, d. h. quer zu den Gitterlinien linear und nimmt von $\Lambda_1$=970 nm auf $\Lambda_2$=977 nm zu.

Bei der Herstellung des Kopplers können die Schichten 20 und 2 wie im Zusammenhang mit dem ersten Beispiel einer Evaneszentfeldsensorplatte beschrieben aufgebracht werden. Auch die Herstellung des Koppelgitters 3 erfolgt nach dem Aufbringen der Schicht 20 wie dort beschrieben. Dabei wird eine Phasenmaske verwendet, deren Gitter in geeigneter Weise, im vorliegenden Fall also linear variiert. Solche Phasenmasken können etwa so hergestellt werden, dass eine biegsame Vorlage geeignet gebogen und im Zweistrahlinterferenzverfahren mit einer Gitterstruktur versehen wird. Von der dann wieder planen Vorlage wird die Phasenmaske durch Replikation, d. h. durch Herstellen eines Abdrucks abgeleitet.

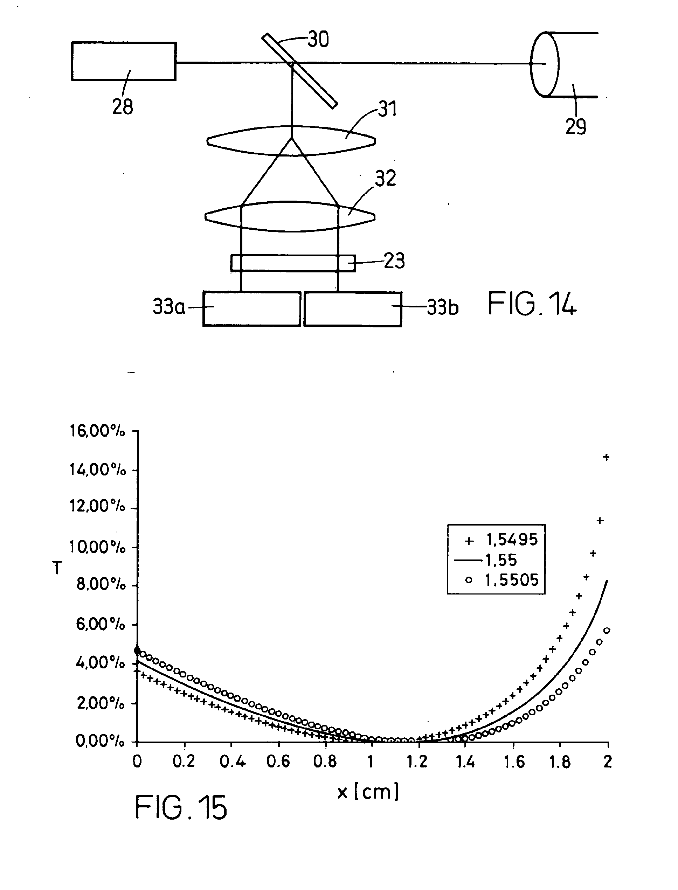

Der Koppler kann in vorteilhafter Weise in einer Vorrichtung zur Ueberwachung und Stabilisierung der Wellenlänge eines Lasers 28 (Fig. 14), dessen Licht in eine Lichtleitfaser 29, z. B. eine Glasfaser, eines Fasernetzes eingespeist wird, eingesetzt werden. Sie umfasst einen teildurchlässigen Spiegel 30, der im vom Laser 28 ausgehenden Lichtstrahl angeordnet ist und eine demselben nachgeordnete erste Optik 31 zur Aufweitung und eine zweite Optik 32 zur Kollimation des vom Spiegel 30 abgelenkten Teil des Lichtstrahls. Den Optiken nachgeordnet ist der oben beschrieben Koppler 23 senkrecht zur Strahlrichtung derart im Lichtstrahl angeordnet, dass derselbe auf das Kopelgitter 3 fällt. Unmittelbar unterhalb des Kopplers 23 ist eine Detektoranordnung angebracht mit zwei Photodetektoren 33a,b, die derart liniennormal unmittelbar aufeinanderfolgend angeordnet sind, dass der von einem ersten Teil des Koppelgitters 3, bei dem die Gitterperiode zwischen $\Lambda_1$ und einem Zwischenwert $\Lambda_i$ liegt, transmittierte Anteil des Lichtstrahls auf den ersten Photodetektor 33a fällt und der von einem verbleibenden zweiten Teil des Koppelgitters 3, bei dem die Gitterperiode zwischen $\Lambda_i$ und $\Lambda_2$ liegt, transmittierte Anteil auf den zweiten Photodetektor 33b. Die Photodetektoren 33a,b sind verschiebbar, so dass $\Lambda_i$ einstellbar ist.

Die Transmissivität des Kopplers 23 hängt empfindlich von der Wellenlänge und der Gitterperiode $\Lambda$ ab. Wegen der Aenderung der Gitterperiode $\Lambda(x)$ mit der Position weist sie daher als Funktion der Position eine spezifische Abhängigkeit von der Wellenlänge des einfallenden Lichtes auf. Dies ist in Fig. 15 dargestellt, der die Transmissivität T als Funktion der Position auf dem Koppelgitter 3 für drei nur wenig verschiedene Wellenlängen (1'549,5 nm, 1'550 nm, 1'550,5 nm) zu entnehmen ist. Bei zunehmender oder abnehmender Wellenlänge verschiebt sich das Minimum der Transmissivitätskurve zu den grösseren bzw. kleineren Gitterperioden und damit zu einer anderen Position auf dem Gitter. Damit verschieben sich aber auch die relativen Intensitäten des von den Photodetektoren 33a und 33b aufgefangenen Lichtes, was sich unmittelbar auf die Grösse ihrer Ausgangssignale $I_a$, $I_b$ auswirkt.

Zur Stabilisierung einer bestimmten Wellenlänge kann nun eine Grobpositionierung der Detektoranordnung gemäss der interessierenden Wellenlänge vorgenommen und dann ein Wert

$$Q = (I_a - I_b)/(I_a + I_b)$$

berechnet und durch Verschieben der Detektoranordnung auf Null eingestellt werden. Eine Aenderung der Wellenlänge des vom Laser 28 ausgehenden Lichtstrahls hat je nach der Richtung derselben eine positive oder negative Abweichung des Wertes Q von Null zur Folge und kann durch entsprechende Steuerung des Lasers 28 ausgeglichen werden. Dabei spielt die Intensität des Lichtstrahls keine Rolle. Lediglich die Intensitätsverteilung des aufgeweiteten Lichtstrahls, die nicht homogen ist, sondern z. B. einer Gauss-Verteilung folgen kann, kann sich u. U. störend auswirken, doch kann dies dann durch geeignete Ausbildung oder Ergänzung der Optiken oder auch rechnerisch kompensiert werden.

Erfindungsgemässe optische Elemente können vielfach abgewandelt werden, ohne dass der Grundgedanke der Erfindung verlassen würde. So sind Abweichungen bis zu 0,3° oder sogar 0,5° vom Mittelwert über das gesamte Element oder sogar über ein Koppelgitter in vielen Fällen zulässig. Und auch bei Evaneszentfeldsensorplatten ist es oft ausreichend, wenn Aenderungen des Koppelwinkels $\Theta$ längs der Gitterlinien nicht mehr als 0,1°/cm betragen.

Auch beim Herstellungsverfahren sind viele Abweichungen oder spezielle Anpassungen an bestimmte Anforderungen möglich. So kann etwa auch beim für das Verfahren entscheidenden Belichtungsschritt die Photolackschicht von der Phasenmaske beabstandet sein, was dessen Durchführung erleichtert. Sie muss jedoch im Nahfeld, d. h. in der Regel in einem Abstand von weniger als 100 μm angeordnet sein, damit das Beugungsmuster hinreichend ausgeprägt ist. Der Abstand kann etwa zwischen 2 μm und 100 μm liegen. Als Lichtquelle kann statt einer Quecksilberdampflampe auch ein Laser, insbesondere ein Excimer-Laser oder Argon-Laser eingesetzt werden. Als Material für die Schicht kommen neben $Ta_2O_5$ auch andere Substanzen in Frage, insbesondere $Nb_2O_5$, $TiO_2$, $ZrO_2$, $Al_2O_3$, $SiO_2$-$TiO_2$, $HfO_2$, $Y_2O_3$, $SiO_xN_y$, $Si_3N_4$, $HfO_xN_y$, $AlO_xN_y$, $TiO_xN_y$, $MgF_2$ oder $CaF_2$. Als Beschichtungsverfahren können auch ionenunterstütztes Aufdampfen oder plasmaunterstützte Gasphasenabscheidung eingesetzt werden. Schliesslich können, wie das bei einem der geschilderten Ausführungsbeispiele beschrieben wurde, auch mehrere Schichten unterschiedlicher Zusammensetzung und Dicke nacheinander aufgebracht werden.

Phasenmasken müssen nicht direkt im Zweistrahlinterferenzverfahren hergestellt sein, sondern können auch direkt oder indirekt von einer so hergestellten Vorlage kopiert sein. Sie können mehrmals mit verschiedenen durchbrochenen Schichten verwendet werden, wenn unterschiedliche Anordnungen von Koppelgittern o. dgl. bei unveränderter Gitterperiode erzeugt werden sollen. Statt einer intransparenten Schicht kann auch eine geeignete Schicht aus transparentem Material eingesetzt werden. So können etwa die Nuten des Gitters durch ein Material mit dem Brechungsindex des Substrats der Phasenmaske aufgefüllt werden.

Die Phasenmaske kann auch entspiegelt sein. In diesem Fall kann die Aufbringung einer reflexmindernden Schicht auf die Photolackschicht auch entfallen, was die serienweise Herstellung der Gitterstrukturen auf den Substraten vereinfacht. Zum Zweck der Entspiegelung wird auf die der Photolackschicht zugewandte Oberfläche der Phasenmaske eine Schicht aufgebracht, deren Brechungsindex zwischen der des Substrats der Phasenmaske und Luft liegt und die z. B. aus $MgF_2$ bestehen kann. Zugleich muss das Gitter so angepasst werden, dass die interferierenden Beugungsordnungen des transmittierten Lichtes wiederum gleiche Intensität haben. Die Anpassung kann durch Aenderung des Nut-Steg-Verhältnisses und der Gittertiefe erfolgen, die mittels in Fachkreisen bekannter Programme leicht berechnet werden können.

**Bezugszeichenliste**

| 1 | Substrat |
|---|---|
| 2 | transparente Schicht |
| 3 | Koppelgitter |
| 4 | Aufsatz |
| 5 | Deckplatte |
| 6 | Oeffnung |

| 7 | Rohrabschnitt |
|---|---|
| 8 | Kavität |
| 9 | Optik |
| 10 | Photolackschicht |
| 11 | Quecksilberdampflampe |
| 12 | Optik |
| 13, 13' | Umlenkspiegel |
| 14 | Phasenmaske |
| 15 | Quarzsubstrat |
| 16 | Photolackschicht |
| 17 | Chromschicht |
| 18 | Photolackschicht |
| 19 | Glasplatte |
| 20 | Schicht |
| 21a,b | Streifenwellenleiter |
| 22 | Kopplungsbereich |
| 23 | Koppler |
| 24 | Eingang |
| 25a,b,c | Ausgänge |
| 26a,b | Lichtleitfasern |
| 27 | Photodetektor |
| 28 | Laser |
| 29 | Lichtleitfaser |
| 30 | teildurchlässiger Spiegel |
| 31 | erste Optik |
| 32 | zweite Optik |
| 33a,b | Photodetektoren |

**Patentansprüche**

1. Optisches Element mit einem transparenten Substrat mit einem ganzflächigen Beugungsgitter und einer strukturiert durchbrochenen Schicht, welche das Beugungsgitter in Transmission in den das Beugungsgitter bedeckenden Bereichen inaktiviert.

2. Optisches Element nach Anspruch 1, **dadurch gekennzeichnet, dass** die durchbrochene Schicht aus einem intransparenten Material, insbesondere Metall besteht und vorzugsweise eine Chromschicht ist.

3. Optisches Element nach Anspruch 1, **dadurch gekennzeichnet, dass** die durchbrochene Schicht aus transparentem Material besteht das im wesentlichen denselben Brechungsindex wie das Substrat besitzt.

4. Optisches Element nach einem der Ansprüche 1 bis 3, **dadurch gekennzeichnet, dass** das Beugungsgitter eine Fläche von mindestens 10cm$^2$ bedeckt.

5. Optisches Element nach einem der Ansprüche 1 bis 4, **dadurch gekennzeichnet, dass** das Beugungsgitter derart ausgebildet ist, dass die Beleuchtung mittels Lichtes einer Wellenlänge bei einem Winkel, der dem Littrow-Winkel entspricht, zu einem ausgeprägten Beugungsmuster führt, dessen Struktur der Struktur des Beugungsgitters entspricht.

6. Optisches Element nach einem der Ansprüche 1 bis 5, **dadurch gekennzeichnet, dass** das Beugungsgitter derart ausgebildet ist, dass die Beleuchtung mittels Lichtes einer Wellenlänge bei senkrechtem Einfall zu einem ausgeprägten Beugungsmuster führt, dessen Struktur der Struktur des Beugungsgitters entspricht.

7. Optisches Element nach einem der Ansprüche 1 bis 6, **dadurch gekennzeichnet, dass** die Oberfläche des Substrates auf einer dem Beugungsgitter gegenüberliegenden Seite mit einer Antireflexbschichtung versehen ist.

8. Verwendung des optischen Elements nach einem der Ansprüche 1 bis 7 als Phasenmaske.

FIG. 1

FIG. 2

FIG. 3

FIG. 4a

FIG. 4b

FIG. 4c

FIG. 4d

FIG. 4e

FIG. 5

FIG. 6

FIG. 7a

FIG. 7b

FIG. 7c

FIG. 7d

FIG. 7e

FIG. 7f

FIG. 7g

FIG. 8a

FIG. 8b

FIG. 9a

FIG. 9b

FIG. 9c

FIG. 9d

FIG. 10

FIG. 11a

FIG. 11b

3b    3a

2

1

23

26b

27

26a

FIG. 12

$\Lambda_1$    $\Lambda(x)$    3    $\Lambda_2$

2

19

x

FIG. 13a

3

2

20

19

1

FIG. 13b

FIG. 14

FIG. 15

**Europäisches Patentamt**

## EUROPÄISCHER RECHERCHENBERICHT

Nummer der Anmeldung

EP 05 01 7720

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 5 652 818 A (BYRON ET AL) 29. Juli 1997 (1997-07-29) * das ganze Dokument * ----- | 1-8 | G02B6/34 G02B6/124 |
| X | US 5 760 960 A (LIN ET AL) 2. Juni 1998 (1998-06-02) * Abbildung 7 * ----- | 1-8 | |
| A | US 5 225 039 A (OHGURI ET AL) 6. Juli 1993 (1993-07-06) ----- | | |

| RECHERCHIERTE SACHGEBIETE (Int.Cl.7) |
|---|
| G02B |

Der vorliegende Recherchenbericht wurde für alle Patentansprüche erstellt

| Recherchenort | Abschlußdatum der Recherche | Prüfer |
|---|---|---|
| Den Haag | 14. Oktober 2005 | Verbandt, Y |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 05 01 7720

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-10-2005

| Im Recherchenbericht angeführtes Patentdokument | | Datum der Veröffentlichung | Mitglied(er) der Patentfamilie | | Datum der Veröffentlichung |
|---|---|---|---|---|---|
| US 5652818 | A | 29-07-1997 | GB | 2302599 A | 22-01-1997 |
| US 5760960 | A | 02-06-1998 | WO | 9636892 A1 | 21-11-1996 |
| US 5225039 | A | 06-07-1993 | EP | 0513755 A2 | 19-11-1992 |

EPO FORM P0461

Für nähere Einzelheiten zu diesem Anhang : siehe Amtsblatt des Europäischen Patentamts, Nr.12/82